Europäisches Patentamt

European Patent Office

Office européen des brevets

(19)

(11) Publication number: 0 120 481
A2

## (12) EUROPEAN PATENT APPLICATION

(21) Application number: 84103192.5

(22) Date of filing: 22.03.84

(51) Int. Cl.³: G 06 K 9/62

(30) Priority: 23.03.83 JP 48232/83

(43) Date of publication of application:
03.10.84 Bulletin 84/40

(84) Designated Contracting States:
DE FR GB IT

(71) Applicant: NEC CORPORATION
33-1, Shiba 5-chome, Minato-ku
Tokyo 108(JP)

(72) Inventor: Hamaguchi, Yoshio
c/o NEC Corporation 33-1, Shiba 5-chome
Minato-ku Tokyo(JP)

(74) Representative: Vossius Vossius Tauchner Heunemann
Rauh
Siebertstrasse 4 P.O. Box 86 07 67
D-8000 München 86(DE)

(54) Method and device for selecting a character shape for each character of a text, e.g. of Arabic, according to four classes.

(57) In a character shape selecting device, one of character shapes is selected to provide a character shape sequential expression for each character (in 21) of a character sequential expression from a character shape table (18) at a predetermined timing in each cycle by a combination of the character (code) in question and a backward linking characteristic (in 22) and a forward linking characteristic (in 23) of next forwardly and backwardly adjacent independent characters. The character shapes are selected in effect by classifying the independent characters of a character set into three classes in which event, the dependent characters are regarded to be in a fourth class. The independent characters are distinguished from the dependent characters with reference to a dependability stored in a character attribute table (17) together with the backward and the forward linking characteristics for each character of the set.

EP 0 120 481 A2

./...

Croydon Printing Company Ltd.

Fig. 4

Our Ref.: S 943 EP
Case      P-8190

NEC CORPORATION
TOKYO, JAPAN

0120481

# METHOD AND DEVICE FOR SELECTING A CHARACTER

# SHAPE FOR EACH CHARACTER OF A TEXT, e. g. OF

# ARABIC, ACCORDING TO FOUR CLASSES

## Background of the Invention:

This invention relates to a method and a device for selecting one of a plurality of character shapes for each character of a text, such as of the Arabic script, depending on its contextual position in each word.

Characters or letters of the type herein called the Arabic characters or script, are used in writing or printing the Arabic languages and also some languages, such as the Persian and the Urdu languages. Despite the facts that the so-called "Arabic" numerals are simple and used worldwide and that the Arabic alphabet consists, depending on the languages, of only from about thirty to forty basic characters except the numerals and others, it is difficult to adapt modern character processing devices to a text written as a sequence of Arabic characters with the simplicity available to a text written in the Roman alphabet. This is because the Arabic character changes its shape depending on its position in a word. The Arabic characters can be classified into two categories, independent characters and dependent characters.

As will later be exemplified with reference to a few of several figures of the accompanying drawing and as referred to as "diacritics" in a comprehensive article contributed by Syed S. Hyder et al to "Biosci. Commun.," 3 (1977), pages 181-206, under the title of "The Theory and Design of a System for Printing and Communication in Arabic-Farsi-Urdu Languages," the dependent characters are written or printed in a calligraphic form above and below a main line of independent characters. Each independent character takes one of four shapes, namely, isolated, initial, medial, and final shapes, according to its position in a word. The isolated shape is linked or concatenated to neither of next backwardly and forwardly adjacent or neighboring independent characters. The initial shape is linked only to a next forwardly adjacent independent character. The medial shape is linked to both next backwardly and forwardly adjacent independent characters. The final shape is linked only to a next backwardly adjacent independent character.

More particularly speaking, a character shape selecting device is for converting a text given in a character sequential expression to a text of a character shape sequential expression of either a calligraphic form or one of various simplified forms. These expressions will later be exemplified.

In conventional character shape selecting devices, a text of the character sequential expression is processed by software with the use of a code table in which a plurality of codes are preliminarily assigned to the respective character shapes of characters of the alphbet. Additional codes must be assigned in the code table to numerals, punctuation marks, a space between each pair of adjacent words, and signs or symbols, such as the plus sign. It is, however, difficult to deal with the codes because several codes are assigned to each independent character according to its character shapes and must be selected in consideration of the contextual position of the independent character in question. This reduces the efficiency of the character shape selecting devices. Furthermore, the code table has only a narrow room when each code is of eight bits. This adversely affects the flexibility of the devices. Incidentally, it should be understood that an expression "a character set" comprises characters, numerals, and the like used in a text.

In order to remove such disadvantages, attempts have been made to provide an improved character shape selecting device for which the codes are assigned not to the respective character shapes but to the respective characters of the set. The character shapes are selected on delivering an output signal from the character shape selecting device to a printer, a CRT display, or a like output device by converting the codes either directly to the character shapes of, for example, dot patterns, or to a different set of codes representative of the respective character shapes. The conversion is carried out also by software. As a consequence, the improved character shape selecting device still has a low efficiency.

According to the above-referenced Hyder et al article, the independent characters of the set are classified into eight groups.

It is said that a device according to Hyder et al gives a text of a pleasantly looking character shape sequential expression. The number of groups is, however, appreciably great. The appreciably great number extreemly complicates the algorithm of processing a character sequential expression.

## Summary of the Invention:

It is therefore an object of the present invention to provide a method of selecting character shapes for characters of the type of the Arabic script, which has a high efficiency.

It is another object of this invention to provide a method of the type described, which is capable of selecting the character shapes with a simple algorithm.

It is a further object of this invention to provide a character shape selecting device for characters of the type of the Arabic script, which has a high efficiency.

It is a still further object of this invention to provide a character shape selecting device of the type described, which is flexible.

A method or a device according to this invention, is for use in converting a character sequential expression primarily to a character 'shape sequential expression of a simplified form.

According to an aspect of this invention, there is provided a method of selecting one of a plurality of character shapes for each character of a character sequence, each character being included in a character set consisting of independent and dependent characters.

The method comprises a first step of preliminarily classifying the independent characters of the set into first through third classes, a second step of successively specifying the characters of the sequence, each character of the sequence as a currently processed character, and a third step of selecting one of the character shapes for the currently processed character with reference to a first and a second one of the first through the third classes into which a first and a second independent character are classified, respectively, where the first and the second independent characters are specified next backwardly and forwardly adjacent to the currently processed character in the sequence, respectively.

It is possible in connection with the method to understand that the characters of the set are classified into four classes with the dependent characters classified into a fourth class.

According to another aspect of this invention, a character shape selecting device is for processing a sequence of characters to select character shapes for the respective characters. Each character is included in a character set and has a dependability and a backward and a forward linking characteristic where the dependability is indicative of whether a character of the set is an independent or a dependent character and where the backward and the forward linking characteristics are indicative of whether or not a character of the set has a capability of linking to next backwardly and forwardly adjacent independent characters in a succession of words, respectively.

The character shape selecting device comprises a source data buffer for storing the characters of the sequence, a character attribute table for storing the dependabilities and the backward and the forward linking characteristics for the respective characters of the set, a character shape table for storing character shapes for each character of the set and for the backward and the forward linking characteristics of the characters of the set, first accessing means for accessing the source data buffer to successively specify a plurality of characters in the sequence while accessing the character attribute table by the successively specified characters to detect the dependabilities and the backward and the forward linking characteristics of the successively specified characters and to locate next backwardly and forwardly adjacent independent characters in the successively specified characters for each of the successively specified characters, and second accessing means coupled to the first accessing means for accessing the character shape table by the character under consideration in the successively specified characters, by the backward linking characteristic of the next backwardly adjacent independent character, and by the forward linking characteristic of the next backwardly adjacent independent character to select one of the character shapes for the character in question in the successively specified characters.

It is to be noted in connection with the above-specified character shape selecting device that the linking characteristics are not decided by the character shapes but by the characters by themselves.

To speak of independent characters, the linking characteristics are specific to each character of the set and dependent on whether or not the independent character has at least one character shape that is linkable to a next backwardly or forwardly adjacent independent character. By way of example, an Arabic character named "alif" is regarded as an independent character which is not linkable to a next forwardly adjacent independent character but to a next backwardly adjacent independent character. A space before or after each word is processed also as an independent character. The space is, however, linkable to neither of next backwardly and forwardly adjacent independent characters. As will become clear as the description proceeds, it is convenient to treat each dependent character as having the capability of linking to both next backwardly and forwardly adjacent independent characters.

When attention is directed to only one of the backward and the forward linking characteristics of each character, the independent characters of the set are divisible into two groups. To speak of the backward linking characteristics, each independent character in one of the groups has at least one character shape that is linkable to a next backwardly adjacent independent character. Each independent character in the other group has no character shape that is linkable to a next backwardly adjacent independent character. In other words, the backward linking characteristics used in the character shape table, are indicative of only two cases where an independent character located next backwardly adjacent to each of the successively specified characters, is in one and the other of the groups. As a result, the character shape table is not complicated at all despite the necessity of storing the character shapes according to the backward and the forward linking characteristics of the independent characters of the set.

## Brief Description of the Drawing:

Fig. 1 (A) shows a character shape sequential expression of a calligraphic form for a word written in the Arabic characters together with a space mark;

Fig. 1 (B) shows a character shape sequential expression of a simplified form for the word depicted in Fig. 1 (A):

Fig. 1 (C) shows a character sequential expression for the word illustrated in Figs. 1 (A) and (B);

Fig. 2 shows assignment of a dependability and a backward and a forward linking characteristic to each character exemplified in Figs. 1 (A) through (C);

Fig. 3 is a block diagram of a system including a character shape selecting device to which the instant invention is applicable;

Fig. 4 is a block diagram of a character shape selecting device according to an embodiment of this invention; and

Fig. 5 is a time chart for use in describing operation of the character shape selecting device depicted in Fig. 4.

## Description of the Preferred Embodiments.:

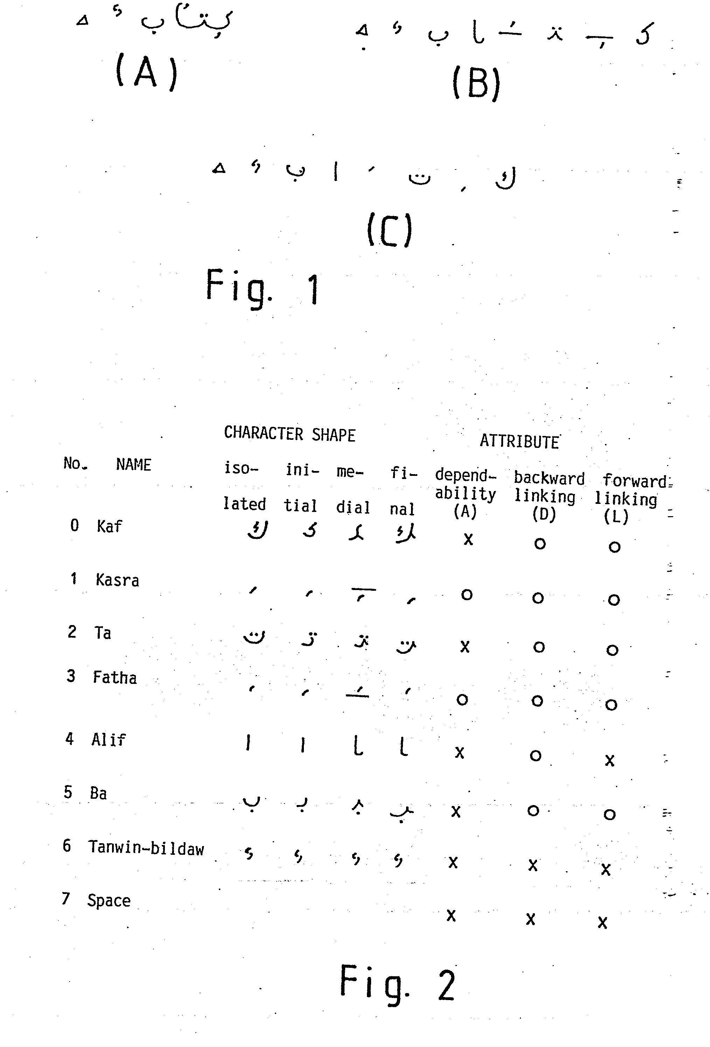

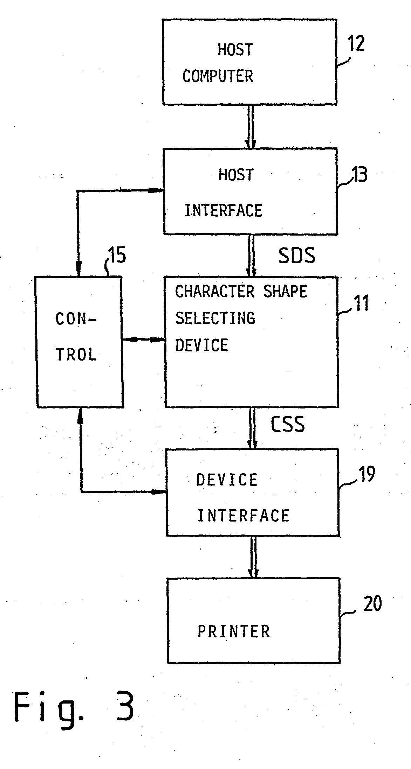

Referring to Figs. 1 (A) through (C) and to Fig. 2, description will be given as regards several Arabic characters or letters in order to facilitate a clear understanding of the present invention. An Arabic word corresponding to an English word "a book" is calligraphically written or printed in Fig. 1 (A), where a mark $\triangle$ represents a space. A text is ordinarily written in this manner as a character shape sequential expression of a calligraphic form.

The characters of an Arabic character set are classified into independent and dependent or subordinate characters. If a dependent character is placed next succeeding an independent character rather than above or below the independent character, a character shape sequential expression of a simplified form results as illustrated in Fig. 1 (B). A character sequential expression of the Arabic word is exemplified in Fig. 1 (C).

Most of the independent characters of the set the continuously written generally from right to left in each concatenation of characters. Referring more particularly to Figs. 1 (A) through (C) and to Fig. 2, it will be understood that the Arabic word consists of eight characters, the space mark inclusive. Merely for convenience of reference, the eight characters are given consecutive or serial numbers 0 through 7. The character numbered 0 is a foremost character of the sequence.

In Fig. 2, each character is shown in its isolated, initial, medial, and final shapes from left to right rather than from right to left. The characters numbered 1 and 3, are dependent characters and calligraphically written below and above a main line along which other characters are written. Each short line drawn for the medial shapes of the dependent characters, represents the reference line. The short line may be used in the character shape sequential expression of simplified forms in order to take one character position for the dependent character. The other characters are regarded as independent characters: The character numbered 4 and named "alif" is therefore regarded as an independent character. This applies fo the character numbered 6 and named "tanwin-bildaw" and to the space mark listed as the character numbered 7.

According to this invention, an attribute called a dependability and designated by A, is used to indicate whether each character of the set is an independent or a dependent character. The dependability A of an independent character is indicated by an "x" (a cross) and that of a dependent character, by an "o" (a circle).

When isolated from a concatenation, a character takes the isolated shape. At the beginning of each concatenation, a character takes the initial shape. In the middle, a character takes the medial shape. At the end, a character takes the final shape. It is herein presumed in order to unify the treatment of all characters of the set that the four shapes are had by all the characters. However, for most characters of a set, some of the four shapes are the same.

For example, "tanwin-bildaw" and the space mark have only one shape.    "Alif" has two shapes, because the isolated and final shapes and the medial shapes are same, respectively.

According to this invention, two additional attributes are used for each character.    The additional attributes are a backward and a forward linking characteristic.    The backward linking characteristic indicates whether or not the character under consideration is linkable to a next backwardly adjacent independent character, which stands to the right of the character in question when the script is in the Arabic characters.    The forward linking characteristic indicates whether or not a character is linkable to a next forwardly adjacent independent character, which stands to the left in the Arabic script.    Inasmuch as the Arabic characters are typically used in describing character shape selecting devices according to this invention, the backward and the forward linking characteristics will be denoted by D and L, respectively.

As described heretobefore and will later become clearer, it is convenient to understand that each dependent character is linkable to both next backwardly and forwardly adjacent independent characters.

The backward and the forward linking characteristics D and L are indicated in Fig. 2 by an "o" and an "x" when each character of the set is linkable and not, respectively.    As pointed out hereinabove, the backward and the forward linking characteristics D and L do not depend on the character shapes but on the characters of the set.

Turning to Fig. 3, a system is for use in printing a sequence of Arabic characters and includes a character shape selecting device 11 to which this invention is applicable. A host computer 12 produces a code sequence representative of a character sequential expression. Inasmuch as the character sequential expression is given for the system by the code sequence, it does not matter whether the character shapes be the isolated shapes as shown in Fig. 1 (C) or be any other one or ones of the four shapes.

The code sequence is delivered to the character shape selecting device 11 as a sequence of source data SDS through a host interface 13. The character shape selecting device 11 processes the characters (codes) given by the source data sequence SDS to select character shapes for the respective characters of the sequence and thereby produces a character shape signal CSS representative of a character shape sequential expression.

Responsive to the code sequence delivered from the host computer 12, the host interface 13 controls a control unit 15 to make the latter supply the character shape selecting device 11 with a start or initialization signal TO, which will later be described more in detail. Alternatively, the code sequence delivered from the host computer 12 may temporarily be stored in the host interface 13 for later delivery to the character shape selecting device 11 when the control unit 15 is energized, as by a start button (not shown).

- 13 -

0120481

Although separately depicted, such a control unit 15 may be regarded as a part of the character shape selecting device 11. In each of the code sequence and the source data sequence SDS, each character is conveniently represented by an eight-bit code.

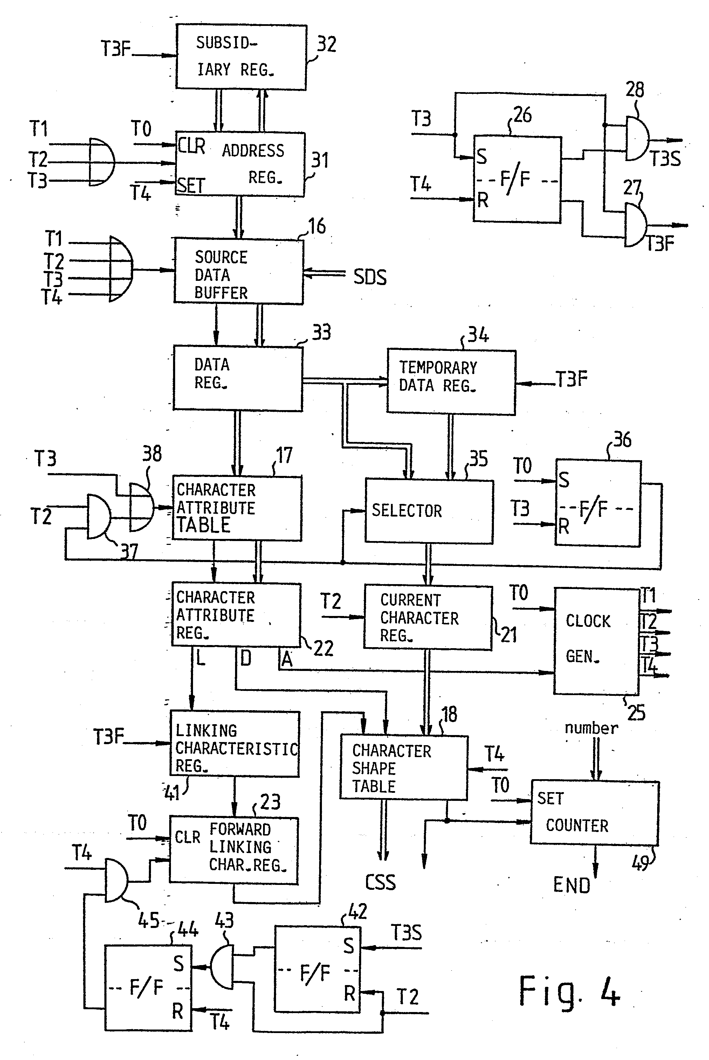

Referring now to Fig. 4, a character shape selecting device 11 comprises a source data buffer 16 for use in temporarily storing the source data sequence SDS delivered from the host interface 13 (Fig. 3). More specifically, the source data buffer 16 has a plurality of addresses consecutively or serially numbered starting at a predetermined number. Without loss of generality, the predetermined number will be regarded as zero. The addresses are for storing the respective characters (codes) of the sequence SDS. By way of example, the characters numbered 0 through 7 in Fig. 2, are stored in the addresses numbered 0 through 7, respectively As the case may be, it is possible to understand that the source data buffer 16 is comprised by the host interface 13 so that the latter may be capable of temporarily storing the code sequence as described before.

According to an embodiment of this invention, a character attribute table 17 is for storing the dependability A and the backward and the forward linking characteristics D and L for each character of the character set. A one-bit signal is sufficient for each of the dependability A and the backward and the forward linking characteristics D and L. When a character of the set is an independent and a dependent character, the dependability A may be given binary zero and one, respectively. When a character is linkable or not, each of the backward and the forward linking characteristics D and L may be given binary one and zero, respectively. Under the circumstances, the dependability A and the backward and the forward linking characteristics D and L of the character numbered 0 in Fig. 2, are given by a binary zero and two binary one's, respectively. For the character numbered 1, the binary one is stored as each of the dependability A and the backward and the forward linking characteristics D and L. For a space (the character numbered 7 in Fig. 2), a binary one and two binary zero's are stored as the dependability A and the backward and the forward linking characteristics D and L. The character attribute table 17 is typically implemented by a read-only memory having addresses accessible by the codes assigned to the respective characters of the set, the space and the like inclusive.

A character shape table 18 is for storing character shapes for each character of the set and for the backward and the forward linking characteristics D's and L's of the independent characters of the set. Inasmuch as each of the backward and the forward linking characteristics D and L of each independent character is either of the binary one and zero, only two pairs of binary one and zero are sufficient for the backward and the forward linking characteristics D's and L's of the independent characters of the set. The character shape table 18 may be a read-only memory having addresses accessible by a combination of an eight-bit signal representative of a character under consideration, a one-bit signal indicative of the backward linking characteristic D of the above-specified next forwardly adjacent independent character, and another one-bit signal indicative of the forward linking characteristic L of the above-described next backwardly adjacent independent character.

As will be described more in detail in the following, a first circuit arrangement accesses the source data buffer 16 to successively specify a plurality of characters in the sequence. In the meantime, the first circuit arrangement accesses the character attribute table 17 in response to the successively specified characters. The first circuit arrangement thereby detects the dependabilities A's and the backward and the forward linking characteristics D's and L's of the successively specified characters. The first circuit arrangement furthermore locates each independent character in the successively specified characters with reference to the dependabilities A's of the successively specified characters.

In this manner, the first circuit arrangement locates next backwardly and forwardly adjacent characters in the successively specified characters for each of the successively specified characters.

A second circuit arrangement accesses the character shape table 18 by a combination of each of the successively specified characters, the backward linking characteristic D of the next forwardly adjacent independent character, and the forward linking characteristic L of the next backwardly adjacent independent character. For brevity of description, the backward and the forward linking characteristics D and L used in accessing the character shape table 18 will be referred to, as regards each of the successively specified characters, as a forwardly adjacent backward linking characteristic and a backwardly adjacent forward linking characteristic and be denoted by D(L) and L(D), respectively.

The second circuit arrangement thereby selects character shapes from the character shape table 18 for the respective characters of the sequence SDS and makes the character shape table 18 produce the above-mentioned character shape signal CSS representative of the successively selected character shapes. The character shapes include those of the dependent characters. Concurrently with selection of each character shape, the character shape table 18 delivers a strobe signal to a lead depicted by a single line.

Turning back to Fig. 3, the character shape signal CSS is delivered to a device interface 19 together with the strobe signal and thence to a printer 20, which may be a dot printer. Supplied with the character shape signal CSS and the strobe signal from the character shape table 18 through the device interface 19, the printer 20 prints a character shape sequential expression on a printing medium (not shown). The character shape sequential expression may be of the calligraphic form or of a predetermined one of the simplified forms.

In Fig. 4, the second circuit arrangement comprises a current character register 21 for storing each of the successively specified characters as a currently processed character as will later be described more in detail. The current character register 21 is preferably an eight-bit register.

A character attribute register 22 is for storing the dependability A and the backward and the forward linking characteristics D and L for each of the successively specified characters as a current dependability A and current backward and forward linking characteristics. As will later become clear, the current backward linking characteristic gives the forwardly adjacent backward linking characteristic $D(L)$ when used in accessing the character shape table 18. The character attribute register 22 is preferably a three-bit register.

As will become clear as the description preceeds, a forward linking characteristic register 23 is for storing the backwardly adjacent forward linking characteristic $L(D)$. Inasmuch as each linking characteristic is binary one or zero, the forward linking characteristic register 23 may be a one-bit register.

The forward linking characteristic register 23 is cleared to zero by the start signal TO. This is to indicate that the foremost character of a text shall be treated that its next backwardly adjacent independent character is not forwardly linkable.

The currently processed character, the forwardly adjacent backward linking characteristic D(L), and the backwardly adjacent forward linking characteristic L(D) are used in accessing the character shape table 18. It is unnecessary to know what the next forwardly and backwardly adjacent independent characters are. It is sufficient only to know whether each of the forwardly adjacent backward and the backwardly adjacent forward linking characteristics D(L) and L(D) is binary one or zero.

The isolated shape is selected for the currently processed character when both of the forwardly adjacent backward and the backwardly adjacent forward linking characteristics D(L) and L(D) are binary zero's. The initial shape is selected when the forwardly adjacent backward linking characteristic D(L) is binary one and the backwardly adjacent forward linking characteristic L(D), binary zero. The medial shape is selected when both of the forwardly adjacent backward and the backwardly adjacent forward linking characteristics D(L) and L(D) are binary one's. The final shape is selected when the forwardly adjacent backward and the backwardly adjacent forward linking characteristics D(L) and L(D) are binary zero and one, respectively. This applies not only to the independent characters but also to the dependent characters.

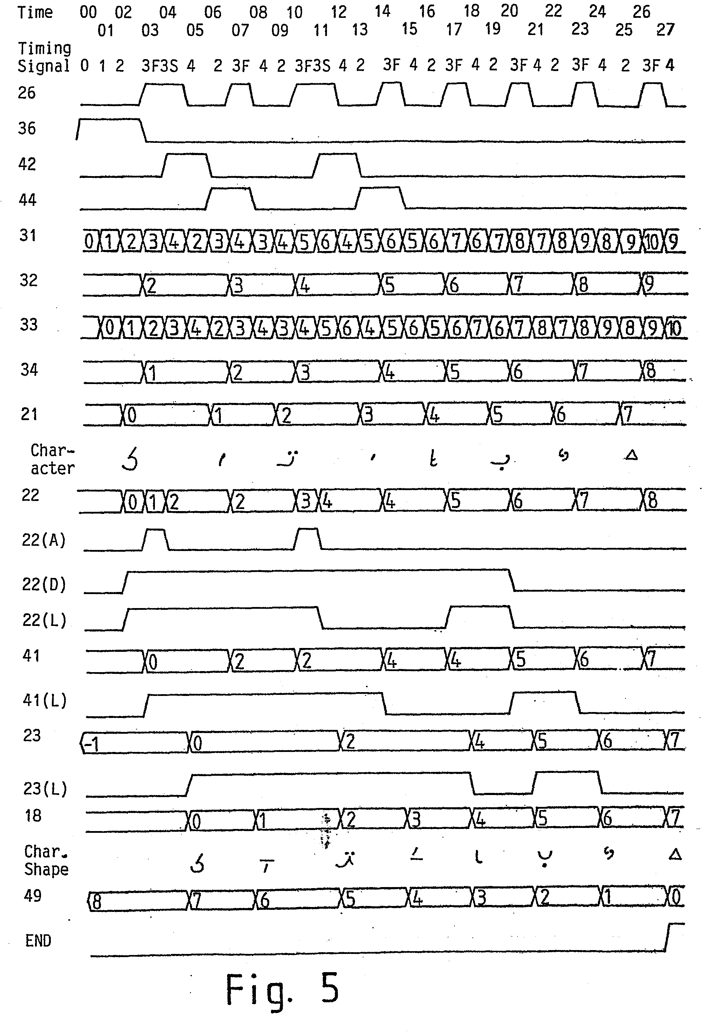

Referring to Fig. 5 in addition to Fig. 4, operation of the character shape selecting device will be described more in detail as regards a word exemplified in any one of Figs. 1 (A) through (C).

In Fig. 5, the first or the top line shows time starting at 00 when the start signal TO is produced. In the second line, the start signal TO is represented merely by 0. In Fig. 4, a clock generator 25 is put into operation by the start signal TO to produce, in response to the current dependability A stored in the character attribute register 22, a plurality of timing signals in cycles. It is preferred that the timing signals produced in an opening or zeroth cycle which immediately follows the start signal TO, be first through fourth timing signals T1, T2, T3, and T4 indicated along the second line of Fig. 5 by 1 through 4 ("3" being indicated either by 3F alone or by 3F and 3S as will very shortly be described). The first rhrough the fourth timing signals T1 to T4 are delivered to first through fourth leads T1 to T4 (the same reference symbols being used), respectively. The first timing signal T1 is not produced in other successive cycles. Only the second through the fourth timing signals T2 to T4 are produced in each of the other successive cycles. The "cycles" may therefore have different lengths.

It should be noted in connection with the above that the clock generator 25 produces an additional timing signal after a predetermined timing signal when the current dependability A indicates a dependent character. Production of the additional timing signal comes to an end when the current dependability A varies from that indicative of the dependent character to another indicative of an independent character. The timing signals, including the predetermined and the additional timing signals, are equally spaced.

In the example being illustrated, the predetermined timing signal is the third timing signal T3. The predetermined and the additional timing signals are repeatedly delivered to the third lead T3. The predetermined timing signal serves as a first or preceding one of the repeatedly produced timing signals. The additional timing signal or signals serve as at least one succeeding timing signal. The preceding and the succeeding timing signals are therefore designated by T3F and T3S and represented along the second line of Fig. 5 by 3F and 3S.

When it is unnecessary to distinguish the preceding timing signal T3F from the succeeding timing signal T3S, the preceding timing signal T3F will be referred to merely as the third timing signal T3. The preceding and the succeeding timing signals T3F and T3S will collectively be called the third timing signal T3.

Depending on the circumstances, it becomes necessary to deliver the preceding and the succeeding timing signals T3F and T3S separately to preceding and succeeding signal leads T3F and T3S. For this purpose, a separator flip-flop 26 is set as depicted along the third line of Fig. 5 by the preceding timing signal T3F delivered thereto through the third lead T3. Set in this manner, the separator flip-flop 26 produces a set output signal near the trailing edge of the preceding timing signal T3F. Even at least one succeeding timing signal T3S be fed through the third lead T3, the set output signal is kept unchanged.

Reset by the fourth timing signal T4, the separator flip-flop 26 produces a reset output signal. A preceding signal AND gate 27 is supplied with the reset output signal and the preceding and the succeeding timing signals T3F and T3S. Inasmuch as the reset output signal disappears upon appearance of the succeeding timing signal T3S, the preceding timing signal T3F alone is delivered to the preceding signal lead T3F. A succeeding signal AND gate 28 is supplied with the set output signal and the preceding and the succeeding timing signals T3F and T3S to deliver only the at least one succeeding timing signal T3S to the succeeding signal lead T3S.

Leaving the fourth through the sixth lines of Fig. 5 untouched for a short while, the first circuit arrangement will be described in detail with reference to Figs. 4 and 5. An address register 31 is cleared by the start signal TO to specify the address numbered 0 in the source data buffer 16 and consequently the character numbered 0 as illustrated in the seventh line of Fig. 5. The numerals depicted along the seventh line likewise represent the addresses and consequently the characters. Numbers 8 through 10 are not given in Fig. 2 but indicate characters which may follow the space (numbered 7 in Fig. 2).

Responsive to the first through the third timing signals T1 to T3 of the opening cycle and to the second and the third timing signals T2 and T3 in each of the other successive cycles, the address register 31 is counted up to a count which stepwise specifies the addresses of the source data buffer 16 as will presently be described.

If included in the third timing signal T3, each succeeding timing signal T3S also counts up the address register 31 as clearly shown along the seventh line.

Supplied with the preceding timing signal T3F, a subsidiary register 32 is loaded with the count of the address register 31.

Each fourth timing signal T4 transfers the count moved or shunted to the subsidiary register 32 back to the address register 31.

The count shunted to the subsidiary register 32 is the count to which the address register 31 is counted up until appearance of the second timing signal T2 in each of the opening and the other successive cycles.   The counts in the address and the subsidiary registers 31 and 32 therefore vary as shown along the seventh and the eighth lines of Fig. 5, respectively.

Supplied with the first timing signal T1 and each of the second through the fourth timing signals T2 to T4 in each of the opening and the other successive cycles, the source data buffer 16 produces the character (code) stored in the address specified by the count in the address register 31.   The source data buffer 16 concurrently produces a strobe signal.   Responsive to the strobe signal, a data register 33 is loaded with the character as depicted along the nine line of Fig. 5 for delivery towards a temporary data register 34 and a selector 35 and for use as an address signal of the character attribute table 17.   The character delivered towards the temporary data register 34 is stored therein in response to the preceding timing signal T3F of each cycle as shown along the tenth line of Fig. 5. It is possible to understand that the temporary data register 34 and and the selector 35 are parts of the above-mentioned second circuit arrangement.

A selector flip-flop 36 is set by the start signal TO as depicted along the fourth line of Fig. 5 to produce an at-once selection signal and is reset by the third timing signal T3. The selector flip-flop 36 remains reset until the start signal TO is produced afresh when the character shape selecting device 11 deals with another sequence of characters. The at-once selection signal is therefore produced only during presence of the start signal TO and the first and the second timing signals T1 and T2 of the opening cycle and makes the selector 35 select the character delivered thereto directly from the data register 33. When the at-once selection signal disappears, the selector 35 selects the character stored in the temporary data register 34. The selected character is delivered towards the current character register 21 and stored therein as the currently processed character in response to the second timing signal T2 one cycle later as shown along the eleventh line of Fig. 5. For mere information, the currently processed characters are depicted along the twelfth line as a character sequential expression. Being different from Fig. 1 (C), the expression is from left to right. The initial shapes are used except the character named "alif" for which the final shape is used for clarity.

Besides the address signal delivered from the data register 33, the character attribute table 17 is supplied with an activation signal. For this purpose, the second timing signal T2 and the at-once selection signal are delivered to an AND gate 37, which should be regarded as a part of the first circuit arrangement. An AND output signal;is produced by the second timing signal T2 of the opening cycle alone. The AND output signal and the third timing signal T3 are fed to an OR gate 38, which produces the activation signal. As a result, the activation signal is produced at the second and the third timing signals T2 and T3 of the opening cycle and at the third timing signal T3 alone in each of the other successive cycles. Responsive to the activation signal, the character attribute table 17 supplies the character attribute register 22 with the dependability A and the backward and the forward linking characteristics D and L of the character specified by the address signal. The character attribute table 17 furthermore produces a strobe signal.

Supplied with the strobe signal, the character attribute register 22 is loaded with the dependability A and the backward and the forward linking characteristics D and L. With the consecutive numbers of the characters shown along the thirteenth line of Fig. 5 for mere information, the dependability A and the backward and the forward linking characteristics D and L stored in the character attribute register 22 are depicted along the fourteenth through the exteenth lines.

In a first part of the second circuit arrangement, the forward linking characteristic L is transferred from the character attribute register 22 to a linking characteristic register 41 in response to the preceding timing signal T3F. Merely for a clear understanding, the seventeenth line of Fig. 5 shows the consecutive numbers of the characters for which the forward linking characteristics L's are successively transferred to the linking characteristic register 41. The eighteenth line shows the forward linking characteristics L's stored in the linking characteristic register 41.

In preparation for activation of the forward linking characteristic register 23, a preparatory flip-flop 42 is set by the succeeding timing signal T3S to produce a set output signal and is reset by the second timing signal T2 of a next following cycle as depicted along the fifth line of Fig. 5. Supplied with the set output signal and the last-mentioned second timing signal T2, an AND gate 43 produces an AND output signal. An inhibit flip-flop 44 is set by the AND output signal and reset by the fourth timing signal T4 of the above-mentioned next following cycle as depicted along the sixth line of Fig. 5. The inhibit flip-flop 44 delivers a reset output signal as an inhibit signal to another AND gate 45, which does not inhibit the fourth timing signal T4, which next follows the succeeding timing signal T3S, but inhibits the fourth timing signal T4 which is produced for the second time after production of the succeeding timing signal T3S. Only when allowed to pass through the other AND gate 45, the fourth timing signal T4 activates the forward linking characteristic register 23.

When activated, the forward linking characteristic register 23 is loaded with the forward linking characteristic L delivered thereto from the linking characteristic register 42. Without the inhibit signal, the forward linking characteristic register 23 would be rewritten in compliance also with the forward linking characteristic L of a dependent character. On the contrary, a combination of the inhibit signal and the fourth timing signal T4 makes the forward linking characteristic register 23 retain the backwardly adjacent forward linking characteristic D(L) of an independent character which will meanwhile be stored in the current character register 21 as the currently processed character.

Along the ninteenth line of Fig. 5, the consecutive numbers of characters are shown, for each of which the forward linking characteristic L is stored in the forward linking characteristic register 23 as the backwardly adjacent forward linking characteristic L(D) of the currently processed character as depicted along the twentieth line. In the ninteenth line, "-1" indicates an initial state which corresponds to a blank before the foremost character of the sequence being processed.

Supplied with the fourth timing signal T4, the character shape table 18 produces the character shape signal CSS and the strobe signal as described before. The characters for which the character shapes are selected, are indicated by the consecutive numbers along the twenty-first line of Fig. 5. The character shapes are depicted along the twenty-second line in the manner depicted in Fig. 1 (B).

A counter 49 is preliminarily loaded with the number of those characters of a text, including the dependent characters, the spaces, and the like, for which the character shapes should be selected. The number of characters may be counted in, for example, the source data buffer 16. In the example of the Arabic word, the number is equal to eight as described heretobefore. As shown along the twenty-third line of Fig. 5, the counter 49 is counted down by each strobe signal supplied from the character shape table 18. When counted down to zero, the counter 49 produces an end signal END as illustrated in the twenty-fourth line of Fig. 5. The end signal END is used in putting an end to operation of the character shape selecting device 11 being illustrated. The end is put to the operation as by stopping operation of the clock generator 25.

As described hereinabove, there is provided also a character shape selecting method according to an aspect of this invention. The character shapes are selected according to the method with the independent characters of the set classified into first through third classes. More particularly, each independent character of the first class has backward and forward linking characteristics D and L, each indicative of an incapability of linking to a next adjacent independent character. Each independent character of the second class has backward and forward linking characteristics D and L indicative of a capability of linking to a next adjacent independent character and the incapability, respectively. Each independent character of the third class has backward and forward linking characteristics D and L, each indicative of the capability. It is possible to understand that the dependent characters of the set are classified into a fourth class in which each character has backward and forward linking characteristics D and L, each indicative of the capability.

The character shape is selected for each currently processed character with reference to the first through the third classes. For this purpose, a first and a second independent character are located in the sequence. The first and the second independent characters are the same as the next backwardly and forwardly adjacent independent characters. One of the character shapes is selected for the currently processed character with reference to a first and a second one of the first through the third classes into which the first and the second independent characters are classified, respectively.

For example, the isolated shape is selected when the first independent character is in either of the first and the second classes and furthermore when the second independent character is of the first class. The initial shape is selected when the first independent character is in either of the first and the second classes and moreover when the second independent character is in either of the second and the third classes.    The medial shape is selected when the first
independent character is of the third class and additionally when
the second independent character is in either of the second and the
third classes.    The final shape is selected when the first and the
second independent characters are of the third and the first classes,
respectively.    It is likewise   possible to select the character shape
for each dependent character.

The method may be carried out by a character shape selecting
device according to a second embodiment of this invention.    When
compared with the character shape selecting device 11 illustrated
with reference to Figs. 4 and 5, it will be understood that the method
need not use the backward linking characteristic D of the first
independent character and the forward linking characteristic L of
the second independent character.    As a consequence, the device
for carrying out the method may not be different from the device 11.

While this invention has thus far been described with reference
to the accompanying drawing, it will now be readily possible for
one skilled in the art to carry this invention into effect in various
other manners.    For example, this invention is equally well applicable
to characters other than the Arabic characters.    In Fig. 3, it is
possible to use a keyboard machine instead of the host computer 12
and a CRT display or a like output device instead of the printer 20.
The character shape table 18 may produce each character shape as
a dot pattern.    Although how to use the character shape signal CSS and the strobe signal produced by the character shape table 18, is out of the scope of this invention, it may be pointed out that the strobe signal is useful in putting the output device into operation when combined with the inhibit signal.   For example, the strobe signal may be used in indexing a point of print relative to the printing medium with the inhibit signal used to inhibit the strobe signal.

WHAT IS CLAIMED IS:

1.   A method of selecting one of a plurality of character shapes for each character of a character sequence, each character being included in a character set consisting of independent and dependent characters, said method comprising:

a first step of preliminarily classifying the independent characters of said set into first through third classes;

a second step of successively specifying the characters of said sequence, each character of said sequence as a currently processed character; and

a third step of selecting one of the character shapes for said currently processed character with reference to a first and a second one of said first through said third classes into which a first and a second independent character are classified, respectively, said first and said second independent characters being specified next backwardly and forwardly adjacent to said currently processed character in said sequence, respectively.

2.   A method as claimed in Claim 1, further comprising the step of preliminarily regarding each of spaces as an independent character of said first class, said spaces being next backwardly and forwardly adjacent to each word in said sequence.

3. A method as claimed in Claim 2, wherein said first step comprises the steps of:

assigning a backward and a forward linking characteristic to each independent character of said set, the backward and the forward linking characteristics being indicative of whether or not an independent character of said set has a capability of linking to next backwardly and forwardly adjacent independent characters in a succession of words, respectively; and

classifying the independent characters of said set into said first through said third classes when both of the backward and the forward linking characteristics of an independent character of said set do not indicate the capability, when the backward linking characteristic of an independent character of said set indicates the capability while the forward linking characteristic thereof does not, and when both of the backward and the forward linking characteristics of an independent character of said set indicate the capability, respectively.

4. A method as claimed in Claim 1, the character shapes of each character of said set being an isolated, an initial, a medial, and a final shape, wherein said third step comprises the steps of:

selecting, the isolated, initial, medial, and final shapes when said first one of the first through the third classes is either of said first and said second classes while said second one of the first through the third classes is said first class, when said first one of the first through the third classes is either of said first and said second classes while said second one of the first through the third classes is either of said second and said third classes, when said first one of the first through the third classes is said third class while said second one of the first through the third classes is either of said second and said third classes, and when said first one of the first through the third classes is said third class while said second one of the first through the third classes is said first class, respectively.

5. A character shape selecting device for processing a sequence of characters to select character shapes for the respective characters, each character being included in a character set and having a dependability and a backward and a forward linking characteristic, the dependability being indicative of whether a character of said set is an independent or a dependent character, the backward and the forward linking characteristics being indicative of whether or not a character of said set has a capability of linking to next backwardly and forwardly adjacent independent character in a succession of words, respectively, said character shape selecting device comprising:

a source data buffer for storing the characters of said sequence;

a character attribute table for storing the dependabilities and the backward and the forward linking characteristics for the respective characters of said set;

a character shape table for storing character shapes for each character of said set and for the backward and the forward linking characteristics of the independent characters of said set;

first accessing means for accessing said source data buffer to successively specify a plurality of characters in said sequence while accessing said character attribute table by the successively specified characters to detect the dependabilities and the backward and the forward linking characteristics of the successively specified characters and to locate next backwardly and forwardly adjacent independent characters in the successively specified characters for each of said successively specified characters; and

second accessing means coupled to said first accessing means for accessing said character shape table by said each of the successively specified characters, the backward linking characteristic of said next forwardly adjacent independent character, and the forward linking characteristic of said next backwardly adjacent independent character to select one of the character shapes for said each of the successively specified characters.

6. A character shape selecting device as claimed in Claim 5, wherein each dependent character of said set is regarded as having the capability of linking to both next backwardly and forwardly adjacent independent characters.

7. A character shape selecting device as claimed in Claim 6, wherein each of spaces next backwardly and forwardly adjacent to each word in said sequence is regarded as one of the independent characters of said set that has the capability of linking to neither of next backwardly and forwardly adjacent independent characters.

8. A character shape selecting device as claimed in Claim 7, wherein said second accessing means comprises:

a current character register;

a character attribute register;

a forward linking characteristic register;

first means coupled to said first accessing means for storing said each of the successively specified characters in said current character register as a currently processed character, for storing the backward linking characteristic of said next forwardly adjacent independent character in said character attribute register as a forwardly adjacent backward linking characteristic, and for storing the forward linking characteristic of said next backwardly adjacent independent character in said forward linking characteristic register as a backwardly adjacent forward linking characteristic; and

second means for accessing said character shape table by said currently processed character, said forwardly adjacent backward

0120481

linking characteristic, and said backwardly adjacent forward linking characteristic to select said one of the character shapes.

9. A character shape selecting device as claimed in Claim 8, further comprising:

start signal producing means for producing a start signal upon start of operation of said character shape selecting device;

a clock generator put into operation by said start signal and responsive to the dependability detected from time to time by said first accessing means as a current dependability for producing a plurality of timing signals in cycles, said timing signals including a predetermined timing signal and an additional timing signal which follows said predetermined timing signal when the current dependability indicates a dependent character;

said first accessing means being responsive to said start and said timing signals for accessing said source data buffer and said character attribute table;

said first means being responsive to said start signal and to preselected ones of said timing signals for loading said current character register, said character attribute register, and said forward linking characteristic register with said currently processed character, said forwardly adjacent backward linking characteristic, and said backwardly adjacent forward linking characteristic, respectively;

said second means being responsive to a prescribed one of said timing signals for accessing said character shape table.

10. A character shape selecting device as claimed in Claim 9, wherein the timing signals produced in an opening cycle which next follows said start signal are first through fourth timing signals, the timing signals produced in each of other successive cycles being the second through the fourth timing signals, said predetermined and said prescribed timing signals being the third and the fourth timing signals, respectively.

11. A character shape selecting device as claimed in Claim 10, wherein:

said source data buffer has a plurality of addresses for storing the characters of said sequence, said addresses being consecutively numbered starting at a predetermined number which is regarded as zero, the address numbered zero being for storing a foremost character in said sequence;

said first accessing means comprising:

address specifying means cleared by said start signal to specify the address numbered zero and thereafter for stepwise specifying other addresses in response to the first through the third timing signals of said opening cycle and to the second and the third timing signals of each of said other successive cycles with that address again specified by the fourth timing signal of each of said opening and said other successive cycles which is meanwhile specified by the second timing signal, the additional timing signal, when produced, specifying that one of the addresses which is next consecutive to the address specified by the predetermined timing signal;

character producing means responsive to every timing signal of each of said opening and said other successive cycles for accessing said source data buffer to produce those characters as the successively specified characters which are stored in the addresses specified by said address specifying means; and

attribute producing means responsive to the predetermined timing signals of said opening and said other successive cycles for successively accessing said character attribute table by the successively specified characters to produce the dependabilities and the backward and the forward linking characteristics for the successively specified characters.

12. A character shape selecting device as claimed in Claim 11, wherein said address specifying means comprises:

an address register having a count for specifying the address of a number which is equal to the count, said address register being cleared by said start signal to specify the address numbered zero;

a subsidiary register;

means responsive to the first through the third timing signals of said opening cycle and to the second and the third timing signals of each of said other successive cycles for counting up the count in said address register;

means responsive to the predetermined timing signal of each of said opening and said other successive cycles for transferring the count from said address register to said subsidiary register; and

means responsive to the fourth timing signal of each of said opening and said other successive cycles for transferring the count from said subsidiary register back to said address register.

13. A character shape selecting device as claimed in Claim 11, wherein said first means comprises:

means coupled to said character producing means and responsive to the second timing signal of each of said opening and said other successive cycles for storing that character in said current character register as said currently processed character which is produced from the address specified by each of the first timing signal and those second timing signals which are produced one cycle earlier than said other successive cycles;

means coupled to said attribute producing means and responsive to the second timing signal of said opening cycle and to the predetermined timing signals of said opening and said other successive cycles for loading from time to time said character attribute register with those backward linking characteristics as said forwardly adjacent backward linking characteristic which are produced in response to the second timing signals of said opening cycle and to the predetermined timing signals of said opening and said other successive cycles, respectively;

means responsive to said start signal for clearing said forward linking characteristic register to make the backwardly adjacent forward linking characteristic indicate the incapability;

forward linking characteristic loading means coupled to said character attribute register and responsive to the fourth timing signals of said opening cycle and of specified ones of said other successive cycles for loading said forward linking characteristic register, as said backwardly adjacent forward linking characteristic, successively with the forward linking characteristics stored in said character attribute register in response to the second timing signal of said opening cycle and to the predetermined timing signals produced one cycle before said specific ones of the other successive cycles, said specific ones of the other successive cycles being one cycle earlier than the other successive cycles except those of said other successive cycles in each of which said additional timing signal is produced.

كِتاب ٬ ة

**(A)**

ك ڔ ڎ ـ ا ب ٬ ة

**(B)**

ك ٫ ت ٬ ا ب ٬ ة

**(C)**

## Fig. 1

|  |  | CHARACTER SHAPE | | | | ATTRIBUTE | | |
|---|---|---|---|---|---|---|---|---|
| No. | NAME | iso-lated | ini-tial | me-dial | fi-nal | depend-ability (A) | backward linking (D) | forward linking (L) |
| 0 | Kaf | كل | ك | ل | كل | X | O | O |
| 1 | Kasra | ، | ، | ー | ، | O | O | O |
| 2 | Ta | ت | ت | ت | ت | X | O | O |
| 3 | Fatha | ، | ، | ــ | ، | O | O | O |
| 4 | Alif | ا | ا | ل | ل | X | O | X |
| 5 | Ba | ب | ب | ب | ب | X | O | O |
| 6 | Tanwin-bildaw | ٬ | ٬ | ٬ | ٬ | X | X | X |
| 7 | Space |  |  |  |  | X | X | X |

## Fig. 2

0120481

Fig. 3

3/4

0120481

Fig. 4

Fig. 5